# FASCICULE DE BREVET EUROPEEN

(11) **EP 0 526 368 B1**
(45) Date de publication et mention de la délivrance du brevet: **31.01.1996**
(21) Numéro de dépôt: 92440091.4
(22) Date de dépôt: 29.07.1992
(51) Int. Cl.: B60D 1/155, B62D 53/06

(54) **Timon d'attelage pour arrière-train de véhicules routiers**
Anhängerdeichsel für eine Hinterachse von Strassenfahrzeugen
Tow bar for rear axle of road vehicles

(30) Priorité: 30.07.1991 FR 9109842
(43) Date de publication de la demande: 03.02.1993
(73) Titulaire: Diebolt, Rémy, F-67440 Marmoutier (FR)
(72) Inventeur: Diebolt, Rémy, F-67440 Marmoutier (FR)
(74) Mandataire: Nuss, Pierre

(56) Documents cités:
- DE-U- 8 629 045
- FR-A- 2 271 065
- US-A- 2 538 448
- US-A- 3 353 843
- PATENT ABSTRACTS OF JAPAN vol. 5, no. 87 (M-072)(759) 6 Juin 1981 & JP-A-56 034 576 (ISUZU JIDOSHA) 6 Avril 1981

## Description

La présente invention concerne le domaine des véhicules de transport poids-lourds de grande longueur, en particulier des semi-remorques, et a pour objet un timon d'attelage pour arrière-train de véhicules routiers.

Les ensembles routiers, en particulier pour le transport de charges de grande longueur, notamment de grumes ou d'éléments de construction de grande longueur, sont généralement constitués par un tracteur et par un arrière-train relié audit tracteur par l'intermédiaire d'un timon téléscopique. Un tel timon téléscopique est destiné à permettre une adaptation de l'ensemble à la longueur de la charge à transporter.

Actuellement les timons téléscopiques des arrière-trains existants sont constitués par au moins deux tubes montés coulissant l'un dans l'autre, le tube de plus grand diamètre étant lui-même monté coulissant dans un tube du châssis de l'arrière-train. Le tube de plus grand diamètre est généralement pourvu, à son extrémité dépassant à l'arrière du tube du châssis, d'une ou de plusieurs butées de retenue soudées, tandis que le tube de plus petit diamètre, qui présente à son extrémité avant un crochet d'accrochage au tracteur, est muni à son extrémité arrière d'un axe amovible formant une butée destinée à coopérer avec l'extrémité arrière du tube de plus gros diamètre en position d'emmanchement maximum, tandis qu'il est retiré pour permettre une adaptation du timon à la longueur de la charge en position de service.

Ces tubes sont, d'une part, bloqués entre eux, près de leur extrémité avant, au moyen d'un vérin à vis monté sur le tube de plus gros diamètre et agissant sur le tube intérieur au moyen d'une garniture de frein et, d'autre part, bloqués sur le châssis par l'intermédiaire d'un vérin pneumatique monté sur ledit châssis, agissant également sur une garniture de frein s'appliquant sur le tube de plus gros diamètre à travers une ouverture du tube du châssis et verrouillé en position de blocage par une came. Le déverrouillage de ce vérin est effectué manuellement par application d'un coup de marteau sur un levier solidaire de l'axe de la came. Le montage des deux tubes coulissants est destiné à assurer le maintien de la liaison entre l'arrière-train et le tracteur en cas de déverrouillage de l'un ou des deux vérins de blocage.

Ces timons connus présentent l'inconvénient, d'une part, de nécessiter pour leur manoeuvre des interventions manuelles relativement longues et pénibles.et, d'autre part, du fait de la constitution des parties arrière des tubes téléscopiques, d'être relativement encombrants, en particulier pour la livraison, un colisage nécessitant impérativement une mise en place des butées sur le tube de plus gros diamètre après la livraison, ce qui entraîne des problèmes éventuels de qualité de la fixation des butées. En outre, la mise en place de l'axe amovible prévu à l'extrémité arrière du tube de plus petit diamètre peut être oubliée, de sorte que la sécurité n'est plus assurée. De plus, en position de service avec chargement de produits de grande longueur, une liaison sûre entre le tracteur et l'arrière-train n'est plus assurée, une rupture accidentelle du verrouillage entre les tubes du timon au moyen du vérin mécanique entraînant un déboîtement du tube de plus petit diamètre hors du tube de plus gros diamètre et, ainsi, le détachement de l'arrière-train.

Enfin, en cas de rupture du verrouillage au moyen des vérins, l'axe amovible peut être déformé et peut pénétrer relativement profondément dans le tube de plus gros diamètre ou être cisaillé, rendant le démontage quasiment impossible sans destruction du timon, voire du tube du châssis. De plus, la prévision de butée soudée sur l'extrémité arrière du tube de plus grand diamètre nécessite, pour le démontage de ce dernier en cas de réparation, un enlèvement de ces butées, par oxycoupage ou par meulage, ce qui augmente d'autant la durée et les frais d'intervention.

On connaît également, par US-A-2 538 448, un timon d'attelage télescopique, essentiellement constitué par deux tubes télescopiques verrouillés en position d'emmanchement par l'intermédiaire d'un élément coulissant chargé élastiquement et escamotable hors de cette position par une rotation relative des tubes.

Ce mode de réalisation présente également l'inconvénient d'être difficile à manoeuvrer et, en outre, il ne permet aucune sécurité contre un déboîtement éventuel.

La présente invention a pour but de pallier ces inconvénients.

Elle a, en effet, pour objet un timon d'attelage pour arrière-train de véhicules routiers, essentiellement constitué par deux tubes téléscopiques montés à coulissement dans un tube du châssis de l'arrière-train, verrouillés dans ce dernier au moyen d'un vérin agissant sur le tube de plus gros diamètre par l'intermédiaire d'une garniture de frein et verrouillés entre eux au moyen d'un autre vérin appliquant une garniture de frein sur le tube de plus petit diamètre, caractérisé en ce que les vérins de verrouillage sont des vérins hydrauliques et en ce que le tube de plus gros diamètre est pourvu d'un dispositif de butée arrière amovible et coopère, contre l'arrachement, avec le tube de plus petit diamètre par l'intermédiaire d'un câble de traction.

L'invention sera mieux comprise grâce à la description ci-après, qui se rapporte à un mode de réalisation préféré, donné à titre d'exemple non limitatif et expliqué avec références aux dessins schématiques annexés, dans lesquels :
la figure 1 est une vue en élévation latérale d'un arrière-train d'attelage routier pourvu d'un timon conforme à l'invention ;
la figure 2 représente en deux demi-coupes les vérins de verrouillage respectivement, à gauche, des tubes du timon entre eux et, à droite, du timon dans le tube du châssis de l'arrière-train, et
la figure 3 est une vue partielle en coupe longitudinale du timon.

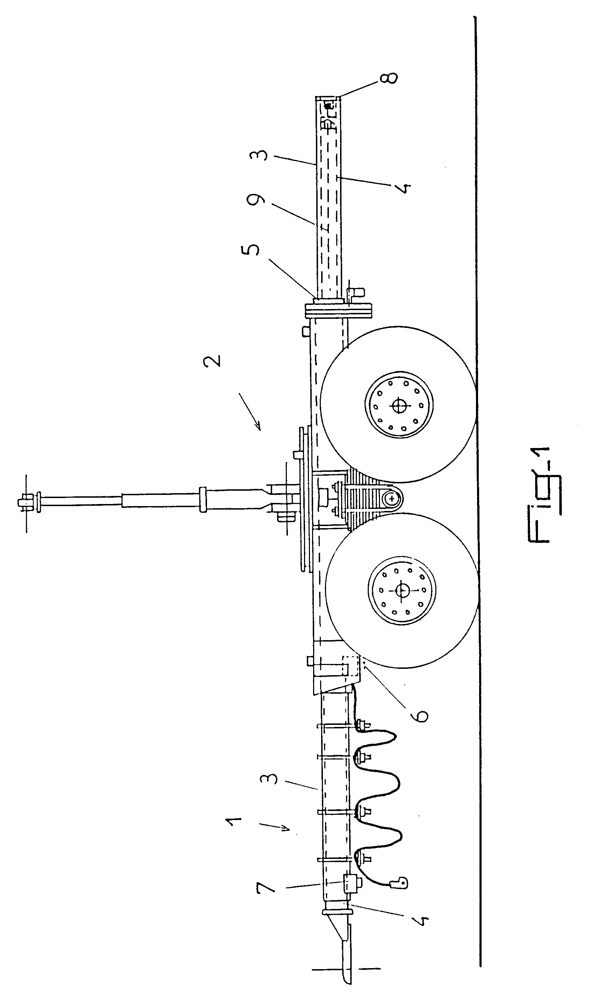

Les figures 1 à 3 des dessins annexés représentent, à titre d'exemple, un timon d'attelage 1 pour arrière-train 2 de véhicules routiers, qui est essentiellement constitué par deux tubes téléscopiques 3 et 4 montés à coulissement dans un tube 5 du châssis de l'arrière-train 2, verrouillés dans ce dernier au moyen d'un vérin 6 agissant sur le tube de plus gros diamètre 3 par l'intermédiaire d'une garniture de frein et verrouillés entre eux au moyen d'un autre vérin 7 appliquant une garniture de frein sur le tube de plus petit diamètre 4.

Conformément à l'invention, les vérins 6 et 7 de verrouillage du timon 1 dans le tube 5 et des tubes 3 et 4 entre eux sont des vérins hydrauliques et le tube 3 de plus gros diamètre est pourvu d'un dispositif 8 de butée arrière amovible et coopère, contre l'arrachement, avec le tube 4 de plus petit diamètre par l'intermédiaire d'un câble de traction 9.

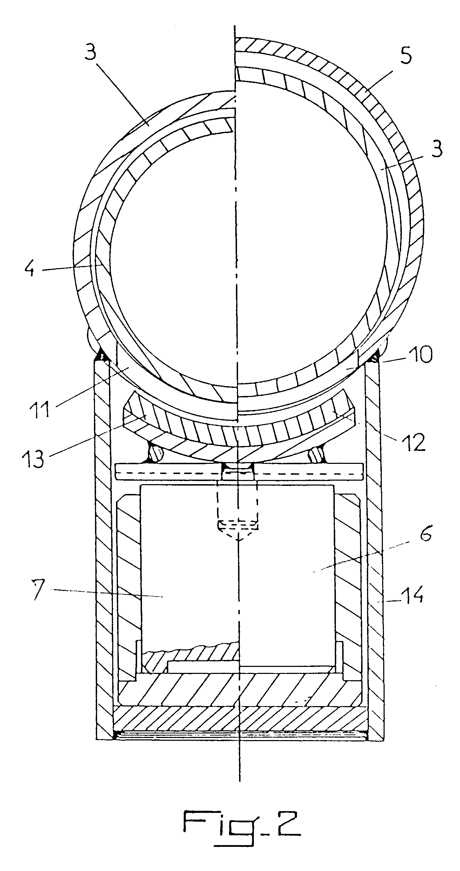

Les vérins 6 et 7 (figure 2) agissent respectivement sur le tube 3 de plus gros diamètre et sur le tube 4 de plus petit diamètre, à travers une ouverture 10 du tube 5 du châssis de l'arrière-train 2 et à travers une ouverture 11 de l'extrémité avant du tube 3, au moyen de garnitures de frein 12 et 13, sont solidarisés avec les tubes 5 et 3 chacun par l'intermédiaire d'un support 14 et sont éventuellement pourvus chacun d'au moins un ressort de rappel en position de déverrouillage (non représenté).

La prévision de tels vérins hydrauliques 6 et 7 permet d'assurer un verrouillage des éléments du timon en position de service sans élément de blocage complémentaire, la fermeture du circuit hydraulique empêchant tout déverrouillage. En outre, le déverrouillage peut être effectué automatiquement par simple ouverture du circuit hydraulique, les ressorts de rappel assurant la course de retrait du piston des vérins 6 et 7.

Le dispositif 8 de butée arrière amovible, prévu à l'extrémité arrière du tube 3 de plus gros diamètre, se présente avantageusement sous forme d'une plaque de butée fixée au moyen de vis 15 sur un flasque 16 de ladite extrémité arrière du tube 3 et présentant une partie circonférentielle dépassant la circonférence du tube 3 et s'étendant au moins sur la circonférence du diamètre extérieur du tube 5 du châssis de l'arrière-train 2 (figure 2). Ainsi, en cas de rupture du verrouillage entre le timon 1 et le tube 5, le dispositif 8 s'applique contre la face arrière du tube 5, empêchant toute progression supplémentaire du tube 3 dans ce dernier.

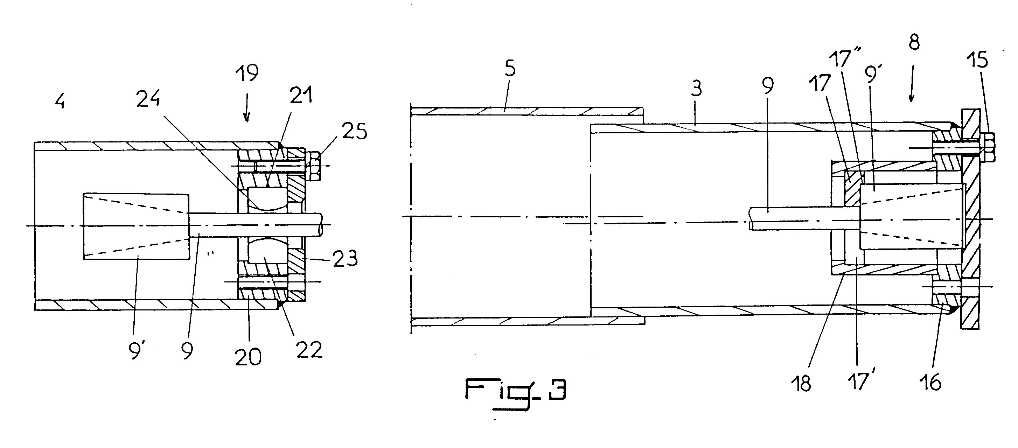

Le câble de traction 9 présente à ses deux extrémités des butées d'appui 9′ destinées à coopérer, du côté du dispositif 8, avec un arrêt 17 monté dans un logement 18 solidaire de la face interne du flasque 16 de l'extrémité arrière du tube 3 et centré sur ce dernier, l'arrêt 17 présentant, d'une part, une fente 17′ de passage du câble et, d'autre part, un logement 17˝ coopérant avec la butée 9′ correspondante, et, à l'extrémité arrière du tube de plus petit diamètre 4 avec un dispositif 19 de guidage et d'arrêt solidaire de ladite extrémité du tube 4, la longueur du câble 9 entre les butées 9′ étant avantageusement légèrement inférieure à la longueur des tubes 3 ou 4 (figure 3).

Le dispositif 19 de guidage et d'arrêt prévu à l'extrémité arrière du tube 4 est constitué par un flasque 20 solidaire de ladite extrémité et présentant un logement concentrique 21 de réception d'une bague 22 de guidage du câble 9 et d'arrêt de la butée d'appui 9′ correspondante de ce dernier et par un couvercle 23 de maintien de la bague 22 dans le logement 21, muni d'un perçage central 24 de passage du câble 9 et fixé sur le flasque 20 au moyen de vis 25.

La bague 22 est avantageusement constituée en une matière synthétique à haute résistance à l'usure par frottement.

Le mode de liaison des tubes 3 et 4 par un câble 9, muni à ses extrémités de butées 9′, permet d'assurer le timon 1 contre tout déboîtement accidentel desdits tubes 3 et 4 et donc contre un détachement de l'arrière-train 2, la longueur du câble empêchant toute sortie de l'extrémité arrière du tube 4 hors du tube 3. En outre, le dispositif de butée arrière amovible 8 et le dispositif 19 de guidage et d'arrêt permettent, du fait de leur simple fixation par vis, un démontage rapide et aisé de l'ensemble du timon 1, soit pour un colisage à l'expédition, soit pour une intervention éventuelle de réparation ou d'entretien. De plus, les éléments d'usure ou de sécurité, tels que le câble 9 ou la bague 22 sont très facilement accessibles et interchangeables sans nécessiter le remplacement obligatoire ou la destruction d'autres pièces.

Grâce à l'invention, il est possible de réaliser un timon d'attelage pour arrière-train de véhicules routiers permettant une mise en oeuvre rapide et aisé, tant en position de service qu'en position de non-utilisation, et assurant automatiquement une sécurité contre tout déboîtement accidentel.

## Revendications

1. Timon d'attelage pour arrière-train de véhicules routiers, essentiellement constitué par deux tubes téléscopiques (3 et 4) montés à coulissement dans un tube (5) du châssis de l'arrière-train (2), verrouillés dans ce dernier au moyen d'un vérin (6) agissant sur le tube de plus gros diamètre (3) par l'intermédiaire d'une garniture de frein et verrouillés entre eux au moyen d'un autre vérin (7) appliquant une garniture de frein sur le tube (4) de plus petit diamètre, caractérisé en ce que les vérins (6 et 7) de verrouillage sont des vérins hydrauliques et en ce que le tube (3) de plus gros diamètre est pourvu d'un dispositif (8) de butée arrière amovible et coopère, contre l'arrachement, avec le tube (4) de plus petit diamètre par l'intermédiaire d'un câble de traction (9).

2. Timon, suivant la revendication 1, caractérisé en ce que les vérins (6 et 7) agissent respectivement sur le tube (3) de plus gros diamètre et sur le tube (4) de plus petit diamètre, à travers une ouverture (10) du tube (5) du châssis de l'arrière-train (2) et à travers une ouverture (11) de l'extrémité avant du tube (3), au moyen de garnitures de frein (12 et 13), sont solidarisés avec les tubes (5 et 3) chacun par l'intermédiaire d'un support (14) et sont éventuellement pourvus chacun d'au moins un ressort de rappel en position de déverrouillage.

3. Timon, suivant la revendication 1, caractérisé en ce que le dispositif (8) de butée arrière amovible, prévu à l'extrémité arrière du tube (3) de plus gros diamètre, se présente avantageusement sous forme d'une plaque de butée fixée au moyen de vis (15) sur un flasque (16) de ladite extrémité arrière du tube (3) et présentant une partie circonférentielle dépassant la circonférence du tube (3) et s'étendant au moins sur la circonférence du diamètre extérieur du tube (5) du châssis de l'arrière-train (2).

4. Timon, suivant l'une quelconque des revendications 1 et 3, caractérisé en ce que le câble de traction (9) présente à ses deux extrémités des butées d'appui (9′) destinées à coopérer, du côté du dispositif (8), avec un arrêt (17) monté dans un logement (18) solidaire de la face interne du flasque (16) de l'extrémité arrière du tube (3) et centré sur ce dernier, l'arrêt (17) présentant, d'une part, une fente (17′) de passage du câble et, d'autre part, un logement (17˝) coopérant avec la butée (9′) correspondante, et, à l'extrémité arrière du tube de plus petit diamètre (4) avec un dispositif (19) de guidage et d'arrêt solidaire de ladite extrémité du tube (4), la longueur du câble (9) entre les butées (9′) étant avantageusement légèrement inférieure à la longueur des tubes (3 ou 4).

5. Timon, suivant la revendication 4, caractérisé en ce que le dispositif (19) de guidage et d'arrêt prévu à l'extrémité arrière du tube (4) est constitué par un flasque (20) solidaire de ladite extrémité et présentant un logement concentrique (21) de réception d'une bague (22) de guidage du câble (9) et d'arrêt de la butée d'appui (9′) correspondante de ce dernier et par un couvercle (23) de maintien de la bague (22) dans le logement (21), muni d'un perçage central (24) de passage du câble (9) et fixé sur le flasque (20) au moyen de vis (25).

6. Timon, suivant la revendication 5, caractérisé en ce que la bague (22) est avantageusement constituée en une matière synthétique à haute résistance à l'usure par frottement.

## Claims

1. A rear axle drawbar for road vehicles mainly comprising two telescopic tubes (3, 4) slidably mounted in a tube (5) of the chassis of the rear axle (2), the two telescopic tubes (3, 4) being locked in the rear axle (2) by means of an actuator (6) acting on the larger-diameter tube (3) by way of a brake lining and being locked together by means of another actuator (7) applying a brake lining to the smaller-diameter tube (4), characterised in that the locking actuators (6, 7) are hydraulic actuators and the larger-diameter tube (3) has releasable rear abutment means (8) and cooperates to prevent pull-out with the smaller-diameter tube (4) by way of a pull cable (9).

2. A drawbar according to claim 1, characterised in that the actuators (6, 7) act on the larger-diameter tube (3) and smaller-diameter tube (4) respectively through an aperture (10) in the tube (5) of the chassis of the rear axle (2) and through an aperture (11) in the front end of the tube (3) by means of respective brake linings (12, 13), are each rigidly secured by way of a support (14) to the tubes (5 and 3) and can, if desired, each have at least one spring for returning them to the unlocked position.

3. A drawbar according to claim 1, characterised in that the releasable rear abutment means (8) at the rear end of the larger-diameter tube (3) are, with advantage, in the form of an abutment plate secured by screws (15) to a flange (16) of the back end of the tube (3) and having a peripheral part extending beyond the circumference of the tube (3) and extending at least over the circumference of the outer diameter of the tube (5).

4. A drawbar according to claim 1 or 3, characterised in that the pull cable (9) at its two ends bearing abutments (9') is adapted to co-operate on the side of the means (8) with a stop (17) disposed in a housing (18) rigidly secured to the inside surface of the flange (16) at the rear end of the tube (3) thereon, the stop (17) being formed with a slot (17') through which the cable extends and with a housing (17'') co-operating with the corresponding abutment (9') and to co-operate at the rear end of the smaller-diameter tube (4) with guiding and stop means (19) rigidly secured to the last-mentioned end of the tube (4), the length of the cable (9) between the abutments (9') being advantageously slightly less than the length of the tubes (3 or 4).

5. A drawbar according to claim 4, characterised in that the guiding and stop means (19) at the rear end of the tube (4) take the form of a flange (20) rigidly secured to the latter end and having a concentric housing (21) for receiving a ring (22) for guiding the cable (9) and stopping the corresponding bearing abutment (9') thereof, the means (19) also comprising a cover (23) for retaining the ring (22) in the housing (21), the cover (23) being formed with a central aperture (24) for the passage of the cable (9) and being secured to the flange (20) by means of screws (25).

6. A drawbar according to claim 5, characterised in that the ring (22) is advantageously made of a synthetic substance having high resistance to wear by rubbing.

## Patentansprüche

1. Anhängerdeichsel für die Hinterachse von Straßenfahrzeugen, im wesentlichen bestehend aus zwei teleskopierbaren Rohren (3, 4), die verschiebbar in einem Rohr (5) des Fahrgestells der Hinterachse (2) angeordnet sind und mit dieser mittels einer Kolben-Zylinder-Einheit (6) verriegelbar sind, die auf das Rohr (3) mit dem größeren Durchmesser über einen Bremsbelag wirkt, und die untereinander mittels einer weiteren Kolben-Zylinder-Einheit (7) verriegelbar sind, die einen Bremsbelag auf das Rohr (4) mit kleinerem Durchmesser preßt, dadurch gekennzeichnet, daß die Kolben-Zylinder-Einheiten (6, 7) zum Verriegeln als Hydraulik-Kolben-Zylinder-Einheiten ausgebildet sind und daß das Rohr (3) mit dem größeren Durchmesser mit einem hinteren, abnehmbaren Anschlag (8) versehen ist und gegen Abreißen mit dem Rohr (4) mit kleinerem Durchmesser über ein Zugseil (9) zusammenwirkt.

2. Anhängerdeichsel nach Anspruch 1, dadurch gekennzeichnet, daß die Kolben-Zylinder-Einheiten (6, 7) jeweils auf das Rohr (3) mit größerem Durchmesser und auf das Rohr (4) mit dem kleineren Durchmesser durch eine Öffnung (10) im Rohr (5) des Fahrgestells der Hinterachse (2) bzw. durch eine Öffnung (11) im Vorderende des Rohres (3) mittels Bremsbelägen (12 und 13) einwirken, jeweils mit einem der Rohre (5, 3) mittels eines Tragelements (14) verbunden sind und gegebenenfalls jeweils mit einer Feder zum Zurückholen in die entriegelte Stellung versehen sind.

3. Anhängerdeichsel nach Anspruch 1, dadurch gekennzeichnet, daß die abnehmbare hintere Anschlagvorrichtung (8), die am hinteren Ende des Rohres (3) mit größerem Durchmesser angeordnet ist, vorteilhafterweise als Anschlagplatte gestaltet ist, die mittels Schrauben (15) an einem Flansch (16) des hinteren Endes des Rohrs (3) befestigt ist und einen Umfang besitzt, der über den Umfang des Rohres (3) hinausragt und sich wenigstens bis zum Umfang des äußeren Durchmessers des Rohres (5) des Fahrgestells der Hinterachse (2) erstreckt.

4. Anhängerdeichsel nach einem der Ansprüche 1 bis 3, dadurch gekennzeichnet, daß das Zugseil (9) an seinen beiden Enden Anschläge (9') aufweist, die auf der Seite der Anschlagvorrichtung (8) mit einer in einem Gehäuse (18) angeordneten Sperre (17) zusammenwirken, wobei das Gehäuse (18) an der Innenseite des Flansches (16) des hinteren Endes des Rohres (3) befestigt und diesem gegenüber zentriert ist und wobei die Sperre (17) einerseits einen Schlitz (17') zum Durchführen des Seils und andererseits eine mit dem entsprechenden Anschlag (9') zusammenwirkende Aufnahme (17'') aufweist, am hinteren Ende des Rohres (4) mit kleinerem Durchmesser mit einer Führungs- und Haltevorrichtung (19) zusammenwirkt, das mit dem Ende des Rohres (4) verbunden ist, wobei die Länge des Seils (9) zwischen den Anschlägen (9') vorteilhafterweise etwas geringer ist als die Länge der Rohre (3) oder (4).

5. Anhängerdeichsel nach Anspruch 4, dadurch gekennzeichnet, daß die Führungs- und Haltevorrichtung (19), die am hinteren Ende des Rohres (4) vorgesehen ist, einen mit diesem Ende verbundenen Flansch (20) besitzt, der eine konzentrische Aufnahme (21) für einen Führungsring (22) des Seils (9) aufweist, der gleichzeitig als Sperre für den entsprechenden Anschlag (9') dient, sowie eine an dem Flansch (20) mittels Schrauben (25) befestigte Abdeckung (23) zum Halten des Ringes (22) in der Aufnahme (21) mit einer zentrischen Bohrung (24) zum Hindurchführen des Seils (9) besitzt.

6. Anhängerdeichsel nach Anspruch 5, dadurch gekennzeichnet, daß der Ring (22) vorteilhafterweise aus einem synthetischen Material mit hohem Widerstand gegen Abnutzung durch Reibung besteht.
